# EUROPEAN PATENT SPECIFICATION

(11) **EP 2 941 011 B1**
(45) Date of publication and mention of the grant of the patent: **14.11.2018**
(21) Application number: 14166415.1
(22) Date of filing: 29.04.2014
(51) Int. Cl.: H04R 1/22, H04R 1/28, B60R 11/02

(54) **A vehicle installation structure comprising a loudspeaker device for attaching to a vehicle panel**
Fahrzeuginstallationsstruktur mit einer Lautsprechervorrichtung zur Befestigung an einer Fahrzeugverkleidung
Structure d'installation de véhicule comprenant un système de haut-parleur à fixer sur un panneau de véhicule

(43) Date of publication of application: 04.11.2015
(73) Proprietor: Alpine Electronics, Inc., Tokyo (JP)
(72) Inventor: Esser, Timo, 70567 Stuttgart (DE)
(74) Representative: Schmitt-Nilson Schraud Waibel Wohlfrom Patentanwälte Partnerschaft mbB

(56) References cited:
- EP-A1- 2 658 280
- JP-A- 2006 060 418
- JP-A- 2012 121 455
- US-A1- 2004 035 635

## Description

The present invention is related to a vehicle installation structure comprising a loudspeaker device which is configured to face a first side of a vehicle panel and comprises a housing and an air communication duct which is configured to be attached to the vehicle panel and to connect an inner space of the housing to a space facing a second side of the vehicle panel which is opposite the first side through an opening in the vehicle panel. The invention is further related to a vehicle structure comprising a vehicle panel and such vehicle installation structure attached to the vehicle panel, and to a vehicle comprising such vehicle structure.

Loudspeaker devices are commonly used for providing audio output to listeners, such as situated in vehicles like cars. Electrical signals that are representative of various characteristics of sounds are transformed by a loudspeaker device into vibrating movements of a diaphragm. These movements of the diaphragm create sound waves that can be heard by listeners. A loudspeaker device typically employs a magnetic driving unit causing a diaphragm connected to a frame of the loudspeaker device to move back and forth. This vibration creates sounds that are produced by the loudspeaker. The frame is commonly enclosed by a housing of the loudspeaker device. When the loudspeaker device is a subwoofer, typically an air communication duct connects an inner space of the housing to an outside space.

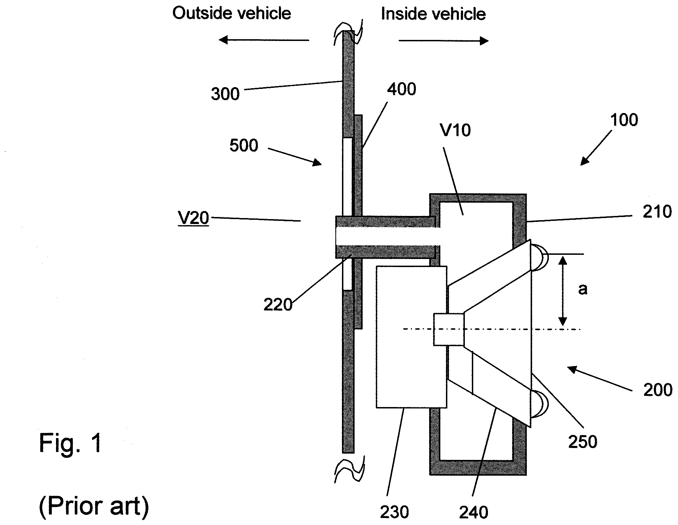

Fig. 1 shows a known arrangement 100 of a loudspeaker device 200 which is installed at a wall of a vehicle including a vehicle panel 300 (such as a vehicle body) which has an opening 500 which is covered by a cap 400, such as made of plastic. The loudspeaker device 200 comprises a housing 210 including an air volume V10 which is communicated through an air communication duct 220 with an outside space V20 of the vehicle. The loudspeaker device 200 further comprises a magnetic driving unit 230 and a frame 240 having a radius a which is attached to a diaphragm 250.

Such arrangement 100 enables the loudspeaker device 200 to be placed in small locations such as in a vehicle side space adjacent to a vehicle panel. For providing the air communication duct 220, an opening 500 needs to be provided in the vehicle panel 300, which may be forming part of the vehicle body. Typically, such opening 500 is a dedicated hole in a vehicle structure, such as a vehicle panel, which may cause additional noise to enter the vehicle. Further, in a case in which such loudspeaker device is a customer option, when no loudspeaker device is installed, a plug or cover needs to cover such hole, which causes additional costs.

JP 2012-121455 A discloses an on-board loudspeaker device capable of preventing a decrease in a sound pressure of a loudspeaker installed on an automobile and relieving a tentative rise of the air pressure in an inner space of the automobile into a vehicle outside space. A vehicle duct having a lid is mounted to an inner side panel of the automobile. When a housing of a loudspeaker device is mounted to the vehicle duct, the lid is pushed by a pressing part provided on the housing, and an exhaust port is opened. The loudspeaker and a communicating tube are mounted to the housing. A ventilation regulation part having a movable valve is provided on the communicating tube. The ventilation regulation part hardly passes the sound pressure generated from the loudspeaker therethrough, but when the pressure of an in-vehicle space is temporarily increased, the air passes through the ventilation regulation part and can be relieved from the inner space of the housing to the vehicle outside space.

JP 2012-015703 A discloses an on-vehicle speaker device for preventing drop of sound pressure of a speaker installed in a vehicle and releasing a temporarily-increased pneumatic pressure in an internal space of the vehicle to an external space. A bracket is attached to a ventilation opening formed in a cabin panel of a vehicle, and a speaker is attached to the bracket. A communication pipe is attached to the bracket, and an internal space and a rear space are communicated by a communication passage inside the pipe. A ventilation regulation portion having a movable valve is arranged at an external opening end of the communication passage. The sound pressure generated from the speaker is difficult to pass through the ventilation regulation portion, and the sound pressure generated in the internal space is difficult to be suppressed. When the pressure in the internal space temporarily becomes high, the air passes through the ventilation regulation portion and the air can be released from the rear space to an external space.

According to this prior art, there is still a separate opening in a vehicle panel which needs to be closed in a potential case in which no loudspeaker device is installed, for example as a result of a customer request. Further, movable ventilation regulation portions are required for closing respective communication tubes, which may implicate reduced reliability of the arrangement over time.

It is an object of the present invention to provide a vehicle installation structure including a loudspeaker device for attaching to a vehicle panel which is capable of reducing manufacturing costs of a vehicle.

The present invention is related to a vehicle installation structure for attaching to a vehicle panel according to claim 1.

According to an aspect of the invention, there is provided a vehicle installation structure for attaching to a vehicle panel comprising an air extraction duct which has a first duct part and a second duct part adjacent to the first duct part and which is configured to extract air from an inner space to an outside space of a vehicle through the first duct part and second duct part, a loudspeaker device configured to face a first side of the vehicle panel and comprising a housing and an air communication duct which is configured to be attached to the vehicle panel and to connect an inner space of the housing to a space facing a second side of the vehicle panel which is opposite the first side through an opening in the vehicle panel. At least a portion of the first duct part and at least a portion of the air communication duct are formed by a common duct, particularly at a region where the air communication duct is to be attached to the vehicle panel. The second duct part has a first end and a second end, wherein the first end opens into the air communication duct and the second end is configured to open into the inner space of the vehicle, and the second duct part is at the first end acoustically closed at least at a frequency band at which the loudspeaker device is configured to operate while air is extractable from the inner space to the outside space through the first duct part and second duct part.

With the invention, it is possible to reduce manufacturing costs of a vehicle, since additional costs for a plug or cover for a separate hole to be closed and additional noise from a separate hole in a vehicle panel can be prevented. The loudspeaker device and its air communication duct can be combined with an existing air extraction duct and opening of a vehicle. Such air extraction duct and opening typically exist in all commonly used cars, typically at the rear of the vehicle. Thus, even in a case in which no loudspeaker device is installed, for instance as a result of a customer request, no separate opening for the loudspeaker device needs to be covered by a plug, as such separate opening is not required. On the other hand, the sound output by the loudspeaker device is not substantially affected since the second duct part of the air extraction duct is designed such that it is acoustically closed at the output frequency band of the loudspeaker device. Further, the function of the air extraction duct is not affected since air can still be extracted from the inner space to the outside space of the vehicle while the loudspeaker device operates and generates, e.g., a high air pressure to be relieved through the air communication duct. No movable parts (like valves, movable regulation portions, or similar) are involved for acoustically closing the second duct part, which increases reliability.

According to the invention, the second duct part has a length between the first end and second end which is at least three times a length of the air communication duct. Such configuration of the second duct part is advantageous for acoustically closing the second duct part at least at a frequency band at which the loudspeaker device is configured to operate, without substantially affecting the output sound.

According to an embodiment, the second duct part has a length between the first end and second end which is between three times and seven times a length of the air communication duct.

Advantageously, the air extraction duct is configured to extract air from an inside passenger space of the vehicle to the outside space of the vehicle through the first duct part and second duct part.

For example, the first duct part, the second duct part and the air communication duct may be formed integrally with each other. For example, they are made from plastic, such has synthetic resin, or metal forming one integrated component which may be formed with the housing or may be attached to the housing of the loudspeaker device and/or to the vehicle panel. With such configuration, manufacturing costs may be futher reduced.

According to an embodiment, the air communication duct of the loudspeaker device comprises a junction which is arranged between a first end and a second end of the air communication duct and into which the second duct part opens out. This may enable a simple design when forming the air extraction duct and the air communication duct as a combined component. For example, a longitudinal axis of the second duct part is arranged at an approximately right angle to a longitudinal axis of the air communication duct.

Generally, the air communication duct may be formed as a tube from the housing of the loudspeaker device to the opening in the vehicle panel. The first duct part and/or the second duct part may be formed as a tube. In such embodiment, the junction which is arranged between the first end and second end of the air communication duct and into which the second duct part opens out, is designed to connect two tube portions with each other.

According to another aspect, there is disclosed a vehicle structure comprising a vehicle panel and a vehicle installation structure according to the invention which is attached to the vehicle panel. Such vehicle structure could be manufactured separately and may be integrated subsequently when manufacturing a vehicle.

According to an embodiment, the vehicle panel forms an outer skin portion or inner skin portion of a vehicle body.

According to a further embodiment, the opening of the vehicle panel may be covered by a ventilation port which is attached to or an integral part of the air communication duct.

According to another aspect, there is disclosed a vehicle comprising a vehicle structure according to the invention.

Aspects and embodiments of the invention will now be described with reference to the drawings, in which:
- Fig. 1: shows an arrangement of a loudspeaker device installed at a wall of a vehicle as known according to the prior art,
- Fig. 2: shows a vehicle installation structure comprising an air extraction duct and a loudspeaker device according to an embodiment of the invention,
- Fig. 3: shows a diagram depicting measurements of sound output by a loudspeaker device of a vehicle installation structure as arranged according to the embodiment of Fig. 2 for different lengths of the second duct part of the air extraction duct.

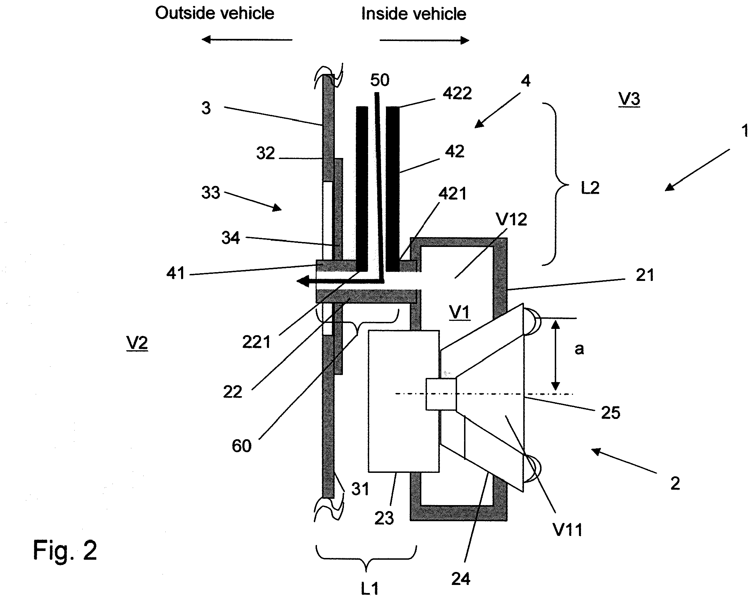

Fig. 2 shows a vehicle installation structure according to an embodiment of the invention. The vehicle installation structure 1 comprises an air extraction duct 4 which has a first duct part 41 and a second duct part 42 adjacent to the first duct part 41. In the present embodiment, the first duct part 41 and second duct part 42 are formed integrally with each other, wherein their longitudinal axes are arranged with a right angle relative to one another. However, other arrangements of the longitudinal axes of the first and second duct parts 41, 42 can also be used.

The air extraction duct 4 is configured to extract air 50 from an inner space V3 to an outside space V2 of a vehicle through the first duct part 41 and the second duct part 42. As such, the air extraction duct 4 has the function of a conventional air extraction duct which is commonly installed in most vehicles, e.g., in order to prevent an overpressure in the inner space of the vehicle, for example when closing a vehicle door. For example, the inner space V3 is an inside passenger space of the vehicle. It may also be any other inner space of the vehicle, such as a trunk space or engine compartment space.

The vehicle installation structure 1 further comprises a loudspeaker device 2 which is configured to face a first side 31 of a vehicle panel 3 comprised in a vehicle structure of a vehicle (not shown), which first side is in the present embodiment an inner side of the vehicle panel. In the present embodiment, when installed in the vehicle structure of a vehicle, the vehicle installation structure 1, particularly the loudspeaker device 2 and/or air extraction duct 4, is attached to the vehicle panel 3 or otherwise fixed with respect to the vehicle panel 3. As such, the loudspeaker device 2 faces the first side 31 of the vehicle panel 3. For example, the vehicle panel 3 forms an outer or inner skin portion of a vehicle body. For instance, the vehicle panel 3 may be a part of a panel structure with two side portions and a hollow space included in between the side portions, wherein the panel 3 as shown in Fig. 2 may form any of the side portions, i.e. an inner side (or skin) portion or an outer side (or skin) portion of such multiple layer panel structure.

The loudspeaker device 2 comprises a housing 21 including an inner space V1 and an air communication duct 22 which is configured to be attached to the vehicle panel 3 and connects the inner space V1 of the housing 21 to a space V2 facing side 32 of panel 3 opposite the side 31 of panel 3. For example, the space V2 is the outside space of the vehicle, such as the environment or a space open to the environment. An outside space which is open to the environment may be, for example, an open hollow space inside of a car bumper or inside of a panel structure which may communicate with the environment. This space V2 is facing a second side 32 of the vehicle panel 3 which is opposite the first side 31. In the panel 3, an opening 33 is provided for the air communication duct 22 to communicate air between the inner space V1 of the housing 21 and space V2, and for the air extraction duct 4 to communicate air between the inner space V3 of the vehicle and space V2.

The loudspeaker device 2 further comprises a magnetic driving unit 23 and a frame 24 (having a radius a) connected to the magnetic driving unit 23. The housing 21 surrounds and encloses at least a part of the frame 24, to which a diaphragm 25 is attached which is operated by the magnetic driving unit 23 for emitting sound to the inside of the vehicle.

The frame 24 divides the inner space V1 of the housing 21 in a first air volume chamber V11 and a second air volume chamber V12. The first air volume chamber V11 is facing the diaphragm 25 and the second air volume chamber V12 is communicating with the air communication duct 22 for communication of air to the outside of the housing 21 in accordance with the operation of the magnetic driving unit 23.

Generally (not limited to the particular arrangement of Fig. 2), at least a portion of the first duct part 41 and at least a portion of the air communication duct 22 are formed by a common duct 60, particularly at the region where the air communication duct 22 is to be attached to the vehicle panel 3. In other words, at least part of the first duct part 41 and at least part of the air communication duct 22 are formed by a common duct 60 which communicates air from the inner space V3 of the vehicle and air from the inner space V1 of the housing 21. The air communication duct 22 uses at least a part of an existing air extraction duct of the vehicle. As such, air from the inner space V3 of the vehicle and air from the inner space V1 of the housing 21 is communicated through a common duct 60 which forms at least a part of the air communication duct 22 and of the first duct part 41. The common duct 60 is configured to be attached to the vehicle panel 3. In the final vehicle structure, the common duct 60 is attached to the vehicle panel 3, particularly by means of the ventilation port 34. The common duct 60 may be in the form of a tube.

The second duct part 42 of the air extraction duct 4 has a first end 421 and a second end 422, wherein the first end 421 opens into the air communication duct 22 of the loudspeaker device 2, and the second end 422 opens into the inner space V3 of the vehicle. At the first end 421, the second duct part 42 is acoustically closed at least at a frequency band at which the loudspeaker device is configured to operate. Nevertheless, since the first end 421 is open to the air communication duct 22, with no valves involved, the air 50 from the inner space V3 is still extractable from the inner space V3 to the outside space V2 through the first duct part 41 and second duct part 42 while the second duct part 42 is acoustically closed at the operating frequency band.

In the present embodiment, the air communication duct 22 comprises a junction 221 which is arranged between a first end and a second end of the air communication duct 22 and into which the second duct part 42 opens out. According to the present embodiment, a longitudinal axis of the second duct part 42 is arranged at an approximately right angle to a longitudinal axis of the air communication duct 22. Other angles, however, may also be useful.

For example, the first duct part 41, the second duct part 42 and the air communication duct 22 may be formed integrally with each other, e.g. from a plastic material or metal.

According to an embodiment, the opening 33 of the vehicle panel 3 is covered by a ventilation port 34, such as a cap or plug having an opening for receiving the air communication duct 22 (in this embodiment, the common duct 60, respectively). The ventilation port 34 may be attached to or may be an integral part of the air communication duct 22 (or common duct 60, respectively). For example, the first duct part 41, the second duct part 42, the air communication duct 22, and the ventilation port 34 may be formed integrally with each other, e.g. from a plastic material or metal. The vehicle installation structure 1 may be attached to the vehicle panel 3 by attaching the ventilation port 34 to the panel 3.

The vehicle installation structure 1 may be a separately manufactured arrangement of components, including the loudspeaker device 2 and air extraction duct 4, which may be delivered to a car manufacturer and fixed to the vehicle panel 3 in the process of manufacture of the vehicle or vehicle panel.

The air communication duct 22 may be formed as a tube from the housing 21 to the opening 33 in the vehicle panel 3. The first duct part 41 and/or the second duct part 42 may likewise be formed as a tube. The junction 221 connects the two tube portions of second duct part 42 and air communication duct 22 with each other.

Thus, the invention provides the following benefits: In case that no loudspeaker device 2 is installed, the existing air extraction duct is used for communication of air 50 through the opening 33 of the vehicle panel 3. In case that a loudspeaker device 2 is installed, a combined arrangement of an air extraction duct and a loudspeaker device according to embodiments of the invention may be used. The second duct part 42 is attached and open to the air communication duct 22 and open to the inside of the vehicle. Air can flow through the second duct part 42 to the air communication duct 22 to the outside of the vehicle to provide the function of an air extraction vent. Since the second duct part 42 is acoustically closed at least at a frequency band at which the loudspeaker device operates, an acoustic short circuit (with no bass sound) can be prevented.

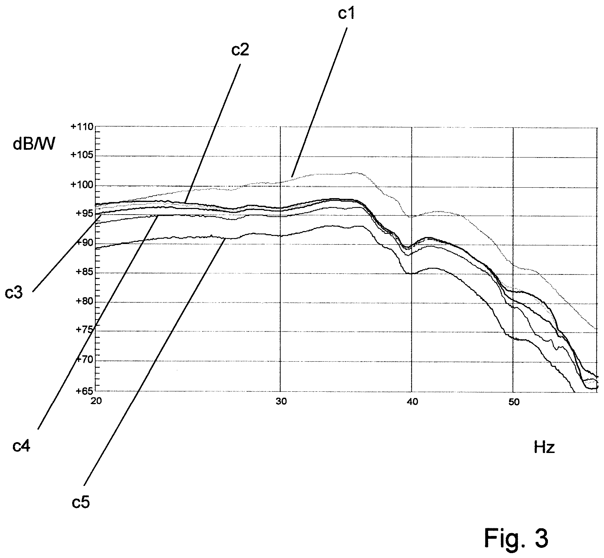

Generally, "acoustically closed" as mentioned herein shall mean that an acoustic short circuit does substantially not occur. Particularly, "acoustically closed" as mentioned herein shall mean that the output sound of the loudspeaker device 2 into the inner space V3 of the vehicle over substantial ranges of the operating frequency band is not more than roughly 5dB lower than compared to using an air communication duct of the same dimensions, but having no second duct part opening into it (thus, having no opening in a side wall thereof and duct to the inner space of the vehicle). In this regard, reference is also made to the example measurements of Fig. 3.

The dimensions of the second duct part 42 should be set to ensure that it is acoustically closed to the frequency band of the loudspeaker. Due to the long wavelengths at the frequency band used for a subwoofer application (particularly 10- 50 Hz), this is not critical. This is shown in Fig. 3, explained in more detail below.

According to the invention, the second duct part 42 has a length L2 between the first end 421 and the second end 422 which is at least three times a length L1 of the air communication duct 22. That is, L2 ≥ 3*L1.

For example, according to an embodiment, the length L2 of the second duct part 42 is between three times and seven times the length L1 of the air communication duct 22, that is 3*L1 ≤ L2 ≤ 7*L1. See also Fig. 3 for further explanation.

For instance, the length L1 may be given by a particular loudspeaker design and/or installation requirement in the vehicle and/or the need for space to attach the second duct part 42. By way of example, L1 may be in the region of 100 mm. In such example, useful lengths of the second duct part 42, i.e. L2, are in the range of 300 to 700 mm. According to another embodiment, L2 may also be larger than 700 mm, which has, however, no significant effect on acoustically closing the second duct part 42.

Fig. 3 shows a diagram depicting measurements of sound output by a loudspeaker device of a vehicle installation structure as arranged according to the embodiment of Fig. 2 for different lengths of the second duct part of the air extraction duct. This diagram shows measurements of sound (in dB/W) depending on the frequency of sound (in Hz) output by the loudspeaker device 2 for different lengths of the second duct part 42 according to Fig. 2. In the present example, the length L1 is 100 mm. The frequency band of interest at which the loudspeaker is intended to operate is between 20 and 50 Hz.

The curve c1 depicts a measurement of sound according to a prior art arrangement as shown in Fig. 1 with a communication duct 220 (having no junction to another tube) having a length of 100 mm.

The curve c2 shows a measurement of sound with a vehicle installation structure according to an embodiment of the invention, as shown in Fig. 2, in which the second duct part 42 has a length L2 of roughly 7*L1, in the present example L2 is roughly 700 mm. The curve c3 shows a measurement of sound with a vehicle installation structure as shown in Fig. 2, in which the second duct part 42 has a length L2 of approximately 3*L1, in the present example L2 is roughly 300 mm.

The curves c2 and c3, when compared to curve c1, show that the output sound into the inner space V3 over the range of the operating frequency band (here: 20 - 50 Hz) is not more than roughly 5 dB (+/- 1 dB) lower than compared to an arrangement with an air communication duct of the same dimensions having no duct to the inner space V3 of the vehicle (such as shown in Fig. 1). This is an acceptable result when considering the benefits of the invention.

On the other hand, curve c4 shows a measurement of sound with a vehicle installation structure as shown in Fig. 2, in which the second duct part 42 has a length L2 of approximately 1.5*L1, in the present example L2 is roughly 150 mm. Further, curve c5 shows a measurement of sound with a vehicle installation structure as shown in Fig. 2, in which the second duct part 42 is not present, i.e. in the present example L2 is 0 mm, and the air communication duct 22 simply comprises an opening at the location of the second duct part 42. According to curves c4 and c5, the loss of sound output is significantly greater. As shown with the examples of Fig. 3, it has been found that the efficiency is best when L2 ≥ 3*L1.

## Claims

1. A vehicle installation structure (1) for attaching to a vehicle panel (3), comprising
- an air extraction duct (4) which has a first duct part (41) and a second duct part (42) adjacent to the first duct part (41), and which is configured to extract air (50) from an inner space (V3) to an outside space (V2) of a vehicle through the first duct part (41) and second duct part (42),
- a loudspeaker device (2) configured to face a first side (31) of the vehicle panel (3) and comprising a housing (21) and an air communication duct (22) which is configured to be attached to the vehicle panel (3) and to connect an inner space (V1) of the housing (21) to a space (V2) facing a second side (32) of the vehicle panel (3) which is opposite the first side (31) through an opening (33) in the vehicle panel (3),
- wherein at least a portion of the first duct part (41) and at least a portion of the air communication duct (22) are formed by a common duct (60), and
- the second duct part (42) has a first end (421) and a second end (422), wherein the first end (421) opens into the air communication duct (22) and the second end (422) is configured to open into the inner space (V3) of the vehicle, wherein the second duct part (42) has a length (L2) between the first end (421) and the second end (422) which is at least three times a length (L1) of the air communication duct (22), so that the second duct part (42) is at the first end (421) acoustically closed at least at a frequency band at which the loudspeaker device is configured to operate while air (50) is extractable from the inner space (V3) to the outside space (V2) through the first duct part (41) and second duct part (42).

2. The vehicle installation structure according to claim 1, wherein the second duct part (42) has a length (L2) between the first end (421) and second end (422) which is between three times and seven times a length (L1) of the air communication duct (22).

3. The vehicle installation structure according to one of claims 1 to 2, wherein the air extraction duct (4) is configured to extract air (50) from an inside passenger space (V3) of the vehicle to the outside space (V2) of the vehicle through the first duct part (41) and second duct part (42).

4. The vehicle installation structure according to one of claims 1 to 3, wherein the first duct part (41), the second duct part (42) and the air communication duct (22) are formed integrally with each other.

5. The vehicle installation structure according to one of claims 1 to 4, wherein the loudspeaker device (2) comprises a magnetic driving unit (23) and a frame (24) connected to the magnetic driving unit (23), wherein the housing (21) surrounds and encloses at least a part of the frame (24).

6. The vehicle installation structure according to claim 5, wherein the frame (24) divides the inner space (V1) of the housing in a first air volume chamber (V11) and a second air volume chamber (V12), wherein the first air volume chamber (V11) is facing a diaphragm (25) connected to the frame (24) and the second air volume chamber (V12) is communicating with the air communication duct (22).

7. The vehicle installation structure according to any of claims 1 to 6, wherein the air communication duct (22) comprises a junction (221) which is arranged between a first end and a second end of the air communication duct (22) and into which the second duct part (42) opens out.

8. The vehicle installation structure according to claim 7, wherein a longitudinal axis of the second duct part (42) is arranged at an approximately right angle to a longitudinal axis of the air communication duct (22).

9. A vehicle structure comprising a vehicle panel (3) and a vehicle installation structure (1) according to any of the preceding claims which is attached to the vehicle panel (3).

10. The vehicle structure according to claim 9, wherein the vehicle panel (3) forms an outer or inner skin portion of a vehicle body.

11. The vehicle structure according to one of claims 9 or 10, wherein the opening (33) of the vehicle panel (3) is covered by a ventilation port (34) which is attached to or an integral part of the air communication duct (22).

12. A vehicle comprising a vehicle structure according to one of claims 9 to 11.

## Patentansprüche

1. Fahrzeuginstallationsstruktur (1) zur Befestigung an einem Fahrzeugplattenelement (3), aufweisend
- einen Luftaustrittskanal (4), der einen ersten Kanalteil (41) und einen zweiten Kanalteil (42) benachbart zu dem ersten Kanalteil (41) aufweist und der dazu ausgebildet ist, Luft (50) durch den ersten Kanalteil (41) und den zweiten Kanalteil (42) aus einem Innenraum (V3) zu einem Außenraum (V2) eines Fahrzeugs auszuleiten,
- eine Lautsprechervorrichtung (2), die dazu ausgebildet ist, einer ersten Seite (31) des Fahrzeugplattenelements (3) zugewandt zu sein, und die ein Gehäuse (21) und einen Luftverbindungskanal (22) aufweist, der dazu ausgebildet ist, an dem Fahrzeugplattenelement (3) angebracht zu werden und einen Innenraum (V1) des Gehäuses (21) mit einem Raum (V2) zu verbinden, der einer zweiten Seite (32) des Fahrzeugplattenelements (3) zugewandt, die der ersten Seite (31) durch eine Öffnung (33) in dem Fahrzeugplattenelement (3) gegenüberliegt,
- wobei mindestens ein Bereich des ersten Kanalteils (41) und mindestens ein Bereich des Luftverbindungskanals (22) durch einen gemeinsamen Kanal (60) gebildet sind, und
- wobei der zweite Kanalteil (42) ein erstes Ende (421) und ein zweites Ende (422) aufweist, wobei das erste Ende (421) in den Luftverbindungskanal (22) mündet und das zweite Ende (422) zur Öffnung in den Innenraum (V3) des Fahrzeugs ausgebildet ist, wobei der zweite Kanalteil (42) eine Länge (L2) zwischen dem ersten Ende (421) und dem zweiten Ende (422) aufweist, die mindestens das Dreifache einer Länge (L1) des Luftverbindungskanals (22) beträgt, so dass der zweite Kanalteil (42) an dem ersten Ende (421) mindestens in einem Frequenzband akustisch geschlossen ist, in dem die Lautsprechervorrichtung für den Betrieb ausgebildet ist, während Luft (50) aus dem Innenraum (V3) durch den ersten Kanalteil (41) und den zweiten Kanalteil (42) zu dem Außenraum (V2) ausgeleitet werden kann.

2. Fahrzeuginstallationsstruktur nach Anspruch 1,
wobei der zweite Kanalteil (42) eine Länge (L2) zwischen dem ersten Ende (421) und dem zweiten Ende (422) aufweist, die zwischen dem Dreifachen und Siebenfachen einer Länge (L1) des Luftverbindungskanals (22) beträgt.

3. Fahrzeuginstallationsstruktur nach einem der Ansprüche 1 bis 2,
wobei der Luftaustrittskanal (4) dazu ausgebildet ist, Luft (50) von einem inneren Fahrgastraum (V3) des Fahrzeugs durch den ersten Kanalteil (41) und den zweiten Kanalteil (42) zu dem Außenraum (V2) von dem Fahrzeug auszuleiten.

4. Fahrzeuginstallationsstruktur nach einem der Ansprüche 1 bis 3,
wobei der erste Kanalteil (41), der zweite Kanalteil (42) und der Luftverbindungskanal (22) einstückig miteinander ausgebildet sind.

5. Fahrzeuginstallationsstruktur nach einem der Ansprüche 1 bis 4,
wobei die Lautsprechervorrichtung (2) eine magnetische Antriebseinheit (23) und einen mit der magnetischen Antriebseinheit (23) verbundenen Rahmen (24) aufweist, wobei das Gehäuse (21) zumindest einen Teil des Rahmens (24) umgibt und umschließt.

6. Fahrzeuginstallationsstruktur nach Anspruch 5,
wobei der Rahmen (24) den Innenraum (V1) des Gehäuses in eine erste Luftvolumenkammer (V11) und eine zweite Luftvolumenkammer (V12) unterteilt, wobei die erste Luftvolumenkammer (V11) einer Membran (25) zugewandt ist, die mit dem Rahmen (24) verbunden ist, und die zweite Luftvolumenkammer (V12) mit dem Luftverbindungskanal (22) in Verbindung steht.

7. Fahrzeuginstallationsstruktur nach einem der Ansprüche 1 bis 6,
wobei der Luftverbindungskanal (22) eine Anschlussstelle (221) aufweist, die zwischen einem ersten Ende und einem zweiten Ende des Luftverbindungskanals (22) angeordnet ist und in die sich der zweite Kanalteil (42) nach außen öffnet.

8. Fahrzeuginstallationsstruktur nach Anspruch 7,
wobei eine Längsachse des zweiten Kanalteils (42) in einem annähernd rechten Winkel zu einer Längsachse des Luftverbindungskanals (22) angeordnet ist.

9. Fahrzeugstruktur mit einem Fahrzeugplattenelement (3) und einer Fahrzeuginstallationsstruktur (1) nach einem der vorhergehenden Ansprüche, die an dem Fahrzeugplattenelement (3) angebracht ist.

10. Fahrzeugstruktur nach Anspruch 9,
wobei das Fahrzeugplattenelement (3) einen Außen- oder Innenhautbereich einer Fahrzeugkarosserie bildet.

11. Fahrzeugstruktur nach einem der Ansprüche 9 oder 10,
wobei die Öffnung (33) des Fahrzeugplattenelements (3) durch eine Belüftungsöffnung (34) abgedeckt ist, die an dem Luftverbindungskanal (22) angebracht ist oder ein integraler Bestandteil desselben ist.

12. Fahrzeug mit einer Fahrzeugstruktur nach einem der Ansprüche 9 bis 11.

## Revendications

1. Structure de montage (1) destinée à un véhicule, pour son montage sur un panneau de véhicule (3), comprenant :
- un conduit d'extraction d'air (4) qui possède une première partie de conduit (41) et une seconde partie de conduit (42) adjacente à la première partie de conduit (41), et qui est configuré pour extraire de l'air (50) à partir d'un espace interne (V3) en direction d'un espace externe (V2) d'un véhicule à travers la première partie de conduit (41) et la seconde partie de conduit (42) ;
- un dispositif (2) faisant office de haut-parleur configuré pour faire face à un premier côté (31) du panneau de véhicule (3) et comprenant un boîtier (21) et un conduit de communication par air (22) qui est configuré pour être fixé au panneau de véhicule (3) et pour relier un espace interne (V1) du boîtier (21) à un espace (V2) opposé à un second côté (32) du panneau de véhicule (3) qui est opposé au premier côté (31) à travers une ouverture (33) dans le panneau de véhicule (3) ;
- dans laquelle au moins une portion de la première partie de conduit (41) et au moins une portion du conduit de communication par air (22) sont réalisées à l'aide d'un conduit commun (60) ; et
- la seconde partie de conduit (42) possède une première extrémité (421) et une seconde extrémité (422), dans laquelle la première extrémité (421) s'ouvre dans le conduit de communication par air (22) et la seconde extrémité (422) est configurée pour s'ouvrir dans l'espace interne (V3) du véhicule ; dans laquelle la seconde partie de conduit (42) possède une longueur (L2) entre la première extrémité (421) et la seconde extrémité (422) qui représente au moins trois fois une longueur (L1) du conduit de communication par air (22), d'une manière telle que la seconde partie de conduit (42) est fermée, à la première extrémité (421), du point de vue acoustique au moins à une bande de fréquences à laquelle le dispositif faisant office de haut-parleur est configuré pour fonctionner tandis que de l'air (50) peut être extrait depuis l'espace interne (V3) en direction de l'espace externe (V2) à travers la première partie de conduit (41) et la seconde partie de conduit (42).

2. Structure de montage destinée à un véhicule selon la revendication 1, dans laquelle la seconde partie de conduit (42) possède une longueur (L2), entre la première extrémité (421) et la seconde extrémité (422), qui représente entre trois fois et sept fois une longueur (L1) du conduit de communication par air (22).

3. Structure de montage destinée à un véhicule selon l'une quelconque des revendications 1 à 2, dans laquelle le conduit l'extraction d'air (4) est configuré pour extraire de l'air (50) à partir d'un habitacle interne (V3) du véhicule en direction de l'espace externe (V2) du véhicule à travers la première partie de conduit (41) et la seconde partie de conduit (42).

4. Structure de montage destinée à un véhicule selon l'une quelconque des revendications 1 à 3, dans laquelle la première partie de conduit (41), la seconde partie de conduit (42) et le conduit de communication par air (22) sont réalisés en une seule pièce les uns avec les autres.

5. Structure de montage destinée à un véhicule selon l'une quelconque des revendications 1 à 4, dans laquelle le dispositif (2) faisant office de haut-parleur comprend une unité d'entraînement magnétique (23) et un encadrement (24) relié à l'unité d'entraînement magnétique (23) ; dans laquelle le boîtier (21) entoure et renferme au moins une partie de l'encadrement (24).

6. Structure de montage destinée à un véhicule selon la revendication 5, dans laquelle l'encadrement (24) divise l'espace interne (V1) du boîtier en une chambre possédant un premier volume d'air (V11) et une chambre possédant un second volume d'air (V12) ; dans laquelle la chambre possédant un premier volume d'air (V11) fait face à un diaphragme (25) relié à l'encadrement (24) et la chambre possédant un second volume d'air (V12) entre en communication avec le conduit de communication par air (22).

7. Structure de montage destinée à un véhicule selon l'une quelconque des revendications 1 à 6, dans laquelle le conduit de communication par air (22) comprend une jonction (221) qui est disposée entre une première extrémité et une seconde extrémité du conduit de communication par air (22), et dans laquelle la seconde partie de conduit (42) s'ouvre sur l'extérieur.

8. Structure de montage destinée à un véhicule selon la revendication 7, dans laquelle un axe longitudinal de la seconde partie de conduit (42) est disposé en formant un angle approximativement droit par rapport à un axe longitudinal du conduit de communication par air (22).

9. Structure pour véhicule comprenant un panneau de véhicule (3) et une structure de montage (1) destinée à un véhicule selon l'une quelconque des revendications précédentes, qui est fixée au panneau (3) du véhicule.

10. Structure pour véhicule selon la revendication 9, dans laquelle le panneau de véhicule (3) forme une portion d'enveloppe externe ou interne d'une carrosserie de véhicule.

11. Structure pour véhicule selon l'une quelconque des revendications 9 ou 10, dans laquelle l'ouverture (33) du panneau de véhicule (3) est recouverte d'un orifice de ventilation (34) qui est fixé au conduit de communication par air (22) ou qui fait partie intégrante du conduit en question.

12. Véhicule comprenant une structure pour véhicule selon l'une quelconque des revendications 9 à 11.
